# NEUE EUROPÄISCHE PATENTSCHRIFT

(11) **EP 3 222 357 B2**
(45) Veröffentlichungstag und Bekanntmachung des Hinweises auf die Entscheidung über den Einspruch: **23.02.2022**
(45) Hinweis auf die Patenterteilung: 05.12.2018
(21) Anmeldenummer: 16161546.3
(22) Anmeldetag: 22.03.2016
(51) Int. Cl.: B04C 5/04, B04C 5/14

(54) **SCHLAMMABSCHEIDER**
SLUDGE SEPARATOR
SEPARATEUR DE BOUE

(43) Veröffentlichungstag der Anmeldung: 27.09.2017
(73) Patentinhaber: IMI Hydronic Engineering International SA, 1262 Eysins (CH)
(72) Erfinder: Bobbert, Markus, 4125 Riehen (CH); Schläpfer, Gian, 4410 Liestal (CH); Scherrer, Alain, 4132 Muttenz (CH); Huber, Valentin, 4056 Basel (CH)
(74) Vertreter: Zacco Sweden AB

(56) Entgegenhaltungen:
- EP-A1- 2 893 981
- WO-A1-96/26524
- WO-A1-2013/002827
- DE-A1- 19 757 120
- DE-A1-102009 005 157
- FR-A1- 2 848 128
- GB-A- 2 490 898
- IT-B- 1 237 891
- KR-A- 20120 091 553
- US-A- 4 298 465
- US-A- 4 502 954
- US-A- 5 451 318
- US-A1- 2002 096 464
- US-A1- 2012 241 369
- US-A1- 2014 144 319

## Beschreibung

Die vorliegende Erfindung betrifft einen Schlammabscheider.

Zur Abscheidung von in einem Flüssigkeitsstrom mitgeführten Feststoffpartikeln werden unter anderem auch nach dem Zyklon-Prinzip arbeitende Schlammabscheider eingesetzt. Ein Schlammabscheider dieser Art ist z.B. in der internationalen Patentanmeldung WO 2009/122127 A1 beschrieben. Dieser bekannte Schlammabscheider umfasst einen topfartigen Abscheidebehälter mit einem im oberen Behälterbereich angeordneten Einlass zur Zufuhr von Flüssigkeit in den Abscheidebehälter und einem ebenfalls im oberen Behälterbereich angeordneten Auslass zur Abfuhr der Flüssigkeit aus dem Abscheidebehälter. Über den Einlass und den Auslass kann der Schlammabscheider in eine Flüssigkeit führende Leitung, z.B. einer Warmwasserheizungsanlage, eingebaut werden. Im Inneren des Abscheidebehälters ist koaxial ein nach unten offenes Rohr angeordnet. Der Auslass ist kommunizierend mit dem Innenraum des Rohrs verbunden, der Einlass mündet in den ringförmigen Zwischenraum zwischen der Behälterwand und dem Rohr. Der Einlass und der Auslass sind so angeordnet, dass in den Abscheidebehälter eingeführte Flüssigkeit in einer zyklonartigen Bewegung entlang der Behälterwand abwärts fliesst und dann innerhalb der zyklonartig abwärts fliessenden Flüssigkeit aufwärts durch das Rohr zum Auslass strömt. Durch die Zyklon-Wirkung ausgeschiedene Feststoffpartikel sinken der Behälterwand entlang nach unten in einen am unteren Behälterende vorgesehenen Schlammabsetzraum. Ein weiterer Schlammabscheider ist auch aus der EP 2 893 981 A1 bekannt.

Durch die vorliegende Erfindung soll ein Schlammabscheider der gattungsgemässen Art so verbessert werden, dass er hinsichtlich Wirkungsgrad und Druckverlust optimal ist, wobei gleichzeitig eine möglichst kompakte und kostengünstige Bauweise erreicht werden soll.

Die der Erfindung zugrundeliegende Aufgabe wird erfindungsgemäss durch einen Schlammabscheider gelöst, wie er durch die Merkmale des unabhängigen Patentanspruchs 1 spezifiziert ist. Weitere vorteilhafte Aspekte ergeben sich aus den Merkmalen der abhängigen Patentansprüche.

Das Wesen der Erfindung besteht im Folgenden: Ein Schlammabscheider umfasst ein Gefäss mit einem eine seitliche Behälterwand, einen Behälterboden und eine Behälterachse aufweisenden Abscheidebehälter welcher einen Eingang und einen Ausgang sowie einen Innenraum aufweist und mit einer Partikeltrennkammer, welche am Ausgang des Abscheidebehälters angeordnet ist und mit dem Abscheidebehälter in fluider Verbindung steht, einen Einlass zur Zufuhr von Flüssigkeit in den Abscheidebehälter und einen Auslass zur Abfuhr der Flüssigkeit aus der Partikeltrennkammer, wobei der Schlammabscheider derart ausgebildet ist, dass in den Abscheidebehälter eingeführte Flüssigkeit in einer zyklonartigen Bewegung entlang der Behälterwand abwärts fliesst und dann innerhalb der zyklonartig abwärts fliessenden Flüssigkeit aufwärts zur Partikeltrennkammer strömt, und wobei der Schlammabscheider wenigstens einen Partikelabscheider umfasst, welcher in der Partikeltrennkammer angeordnet ist.

Die Anordnung des Abscheidebehälters und der Partikeltrennkammer in einem Gefäss sowie wenigstens eines Partikelabscheiders in der Partikeltrennkammer ermöglicht eine besonders kompakte Bauweise des Schlammabscheiders mit einer besonders effizienten Partikelabscheidung bei gleichzeitiger Minimierung von Druckverluste. Diese Anordnung des Partikelabscheiders ermöglicht eine effiziente Führung des entstehenden Zyklons im Abscheidebehälter.

Insbesondere ist der Partikelabscheider ausserhalb des Abscheidebehälters in der Partikeltrennkammer angeordnet. Der Partikelabscheider kann dabei derart angeordnet sein, dass er nicht in den Abscheidebehälter hineinragt. Die Länge des Teils des Partikelabscheiders, welcher in der Trennkammer angeordnet ist, ist daher insbesondere kleiner als die Höhe der Patikeltrennkammer vom Auslass des Abscheidebehälters bis zur Öffnung im Deckel der Partikeltrennkammer. Insbesondere ist der Partikelabscheider vollständig in der Partikeltrennkammer angeordnet. Diese Anordnung des Partikelabscheiders ermöglicht eine effiziente Führung des entstehenden Zyklons im Abscheidebehälter ohne Störung, wodurch der Zyklon seine volle Wirkung entfalten kann, gegenüber einer Anordnung des Partikelabscheiders im Abscheidebehälter, wodurch der Zyklon kollabieren könnte.

In einer weiteren Ausführungsform des Schlammabscheiders ist der wenigstens ein Partikelabscheider ein Filter. Der Filter ist insbesondere in der Partikeltrennkammer derart angeordnet, dass die Flüssigkeit, welche in Betrieb aus dem Ausgang des Abscheidebehälters fliesst, den Filter durchströmen kann. Dabei ist der Filter bevorzugt derart angeordnet, dass die gesamte Flüssigkeit, welche in Betrieb aus dem Ausgang des Abscheidebehälters fliesst, den Filter durchströmen kann.

Die Verwendung eines Filters als Partikelabscheider ermöglicht eine sehr effiziente Entfernung der Restpartikel, welche im Abscheidebehälter nicht getrennt wurden, aus dem zu reinigenden Flüssigkeitsstrom.

Insbesondere ist der Filter ausserhalb des Abscheidebehälters in der Partikeltrennkammer angeordnet. Der Filter kann vollständig in der Partikeltrennkammer angeordnet sein.

Der Filter ist bevorzugt derart angeordnet, dass der gesamte Flüssigkeitsstrom in Betrieb durch den Filter geleitet wird, bevor die gefilterte Flüssigkeit die Partikeltrennkammer von feinen Partikeln aufgereinigt verlässt.

Insbesondere kann der Filter entweder durch ausbauen gereinigt werden oder ersetzt werden, oder durch Rückspülung gereinigt werden. Bei der Rückspülung können die ausgespülten Partikel über eine Öffnung, insbesondere über ein Ventil, im Boden des Abscheidebehälters aus dem Kreislauf entweichen und somit aus dem System ausgeschieden werden.

In einer anderen Ausführungsvariante des Schlammabscheiders ist der wenigstens ein Partikelabscheider ein Magnet. Der Magnet ist insbesondere in der Partikeltrennkammer derart angeordnet, dass in Betrieb in der Flüssigkeit mitgenommene magnetische Partikel wenigstens teilweise am Magneten abgeschieden werden können bevor die Flüssigkeit die Partikeltrennkammer verlässt oder den Filter passiert.

Die Verwendung eines Magnets als Partikelabscheider ermöglicht eine sehr effiziente Entfernung der magnetischen Restpartikel, welche im Abscheidebehälter nicht getrennt wurden, aus dem zu reinigenden Flüssigkeitsstrom.

Insbesondere ist der Magnet ausserhalb des Abscheidebehälters in der Partikeltrennkammer angeordnet. Der Magnet kann dabei derart angeordnet sein, dass er nicht in den Abscheidebehälter hineinragt. Die Länge des Magnetteils, welcher in der Trennkammer angeordnet ist, ist daher insbesondere kleiner als die Höhe der Patikeltrennkammer vom Auslass des Abscheidebehälters bis zur Öffnung im Deckel der Partikeltrennkammer.

Insbesondere kann die Partikelkammer entweder nur einen (oder mehrere) Magneten enthalten oder einen (oder mehrere) Magneten in Kombination mit einem (oder mehreren) Filter. Eine Kombination erweist sich als besonders vorteilhaft zur Trennung der Feinstpartikel, welche nicht im Abscheidebehälter abgeschieden wurden. Insbesondere fängt der Magnet magnetische Partikel ab bevor diese den Filter erreichen, wodurch eine deutlich verlängerte Standzeit des Filters erreicht wird.

Insbesondere kann der Magnet von aussen entnehmbar sein, beispielsweise durch eine Öffnung mit einem Gewinde im Deckel oder in der Wand der Partikeltrennkammer, ohne den Schlammabscheider auseinanderbauen zu müssen.

Gemäss der Erfindung ist im Behälterboden wenigstens ein Ablassventil eingesetzt, welches dezentral zur Behälterachse im Behälterboden angeordnet ist und mit dem Innenraum des Abscheidebehälters verbunden ist.

Dieses dezentrale Ablassventil ermöglicht die Entfernung der abgeschiedenen Partikel aus dem Schlammabscheider auch dann, wenn die Behälterachse, und somit das Ablassventil, nicht vertikal zum Lot angeordnet sind. Diese Ausführungsform ermöglicht es, den Schlammabscheider waagerecht oder in jeder andere Position abweichend vom Lot einzusetzen, indem das dezentral angeordnete Ablassventil an einem möglichst niedrigen Punkt angeordnet wird, wo die Partikel durch den Einfluss der Erdgravitation im Abscheidebehälter ansammeln. Die erweist sich daher als besonders flexibel in der Verwendung des Schlammabscheiders.

In einer alternativen Ausführungsform des Schlammabscheiders ist der Behälterboden des Abscheidebehälters durch einen gewölbten Boden gebildet und im Behälterboden wenigstens ein Ablassventil eingesetzt ist, welches dezentral zur Behälterachse im Behälterboden angeordnet ist und mit dem Innenraum des Abscheidebehälters verbunden ist. Der gewölbter Boden relativ zum Abscheidebehälter um die Behälterachse insbesondere rotiert werden.

Ein gewölbter Boden hat den Vorteil einer leichten Bauart, welche die Handhabung des Abscheidebehälters bei der Montage erleichtert.

In einer weiteren Ausführungsform des Schlammabscheiders kann der Behälterboden des Abscheidebehälters durch einen gewölbten Boden mit einer dezentralen Wölbung gebildet sein, welche Wölbung ihre Spitze dezentral zur Behälterachse aufweist und das Ablassventil an der Spitze des gewölbten Bodens mit dem Innenraum des Abscheidebehälters verbunden ist. Insbesondere kann der gewölbte Boden relativ zum Abscheidebehälter um die Behälterachse rotiert werden. Der gewölbte Boden ist dann beispielsweise mit einer Kupplung mit dem Abscheidebehälter drehbar verbunden.

Die Verwendung eines solchen gewölbten Bodens mit einer dezentralen Wölbung hat den Vorteil, die Position des Ablassventils optimal anzupassen, insbesondere an einem möglichst tiefen Punkt des Schlammabscheiders, wenn der Schlammabscheider (Behälterachse) nicht vertikal angeordnet ist.

In einer zusätzlichen Ausführungsform des Schlammabscheiders ist der Behälterboden des Abscheidebehälter durch eine Bodenplatte gebildet ist, durch welche das Ablassventil dezentral zur Behälterachse mit dem Innenraum des Abscheidebehälters verbunden ist und gegebenenfalls relativ zum Abscheidebehälter um die Behälterachse rotiert werden kann. Die Bodenplatte ist beispielsweise mit einer Kupplung mit dem Abscheidebehälter drehbar verbunden.

Diese Ausführungsform ermöglicht eine sehr einfache Anpassung des Schlammabscheiders an die Anforderungen der Anwendung sowie eine sehr kompakte Bauart des Schlammabscheiders.

Gemäss der Erfindung ist der Behälterboden des Abscheidebehälter durch eine Bodenplatte gebildet, welche mehrere im Winkel voneinander beabstandete abschliessbare Öffnungen dezentral zur Behälterachse aufweist, und das Ablassventil durch eine der Öffnungen mit dem Innenraum des Abscheidebehälters verbunden ist.

Dies ermöglicht eine besonders einfache Ausgestaltung des Schlammabscheiders.

In einer anderen alternativen Ausführungsform des Schlammabscheiders umfasst die Partikeltrennkammer einen Deckel, welcher entfernbar ist.

Diese Ausführungsform ermöglicht einen Zugang zum Filter für eine leichte Entnahme des Partikelabscheiders, insbesondere des Filters, oder auch des Magneten, zwecks Reinigung oder Austausch.

In einer weiteren Ausführungsform weist der Abscheidebehälter in seinem unteren Bereich einen vorzugsweise strömungsberuhigten Schlammabsetzraum auf. Dies erleichtert die Sedimentation der Feststoffpartikel.

In einer zusätzlichen Ausführungsform ist im Abscheidebehälter oberhalb des strömungsberuhigten Schlammabsetzraums ein Zwischenboden mit mindestens einer peripheren Öffnung angeordnet. Der Schlamm setzt sich bei dieser Ausführungsvariante auf dem Zwischenboden ab und gelangt dann durch die periphere Öffnung bzw. Öffnungen in den darunterliegenden Absetzraum, von wo er dann z.B. durch ein Ablassventil entnommen werden kann.

Der Einlass und der Auslass können an bezüglich der Behälterachse diametral gegenüberliegenden Seiten des Abscheidebehälters oder auch in einem von 180° abweichenden Winkel zur Behälterachse angeordnet sein, so dass Einlass und Auslass nicht an bezüglich der Behälterachse diametral gegenüberliegenden Seiten des Abscheidebehälters angeordnet sind. Beispielsweise kann der Winkel 90° oder nahezu 90° betragen.

Die diametral gegenüberliegende Anordnung des Einlasses und des Auslasses kann je nach Anforderung den Einbau des Schlammabscheiders in eine Flüssigkeitsleitung erleichtern.

Ein Winkel zur Behälterachse zwischen dem Einlass und dem Auslass kann jedoch vorteilhaft gegenüber einer diametral gegenüberliegenden Anordnung sein. Dieser Winkel kann einen beliebigen Wert haben, insbesondere können Einlass und Auslass beispielsweise rechtwinklig zur Behälterachse angeordnet sein. Einen Winkel zwischen Einlass und Auslass, welcher von 180° abweicht, ermöglicht bei entsprechender Anforderung eine sehr einfache Umlenkung des Flüssigkeitsstroms im Kreislauf beispielsweise von einer vertikal verlaufenden Rohrleitung zu einer horizontal verlaufenden Rohrleitung, ohne Verwendung eines zusätzlichen Rohrbogens.

Weiterhin können in einer anderen Ausführungsform im Abscheidebehälter Strömungsumlenkmittel angeordnet sein, welche durch den Einlass in den Abscheidebehälter einströmende Flüssigkeit seitlich der Behälterwand entlang und schräg nach unten umlenken.

Durch den Einsatz der gesonderten Strömungsumlenkmittel wird einerseits eine intensive zyklonartige Flüssigkeitsströmung erreicht und anderseits wird der Druckverlust im Schlammabscheider minimiert. Durch die verbesserte zyklonartige Flüssigkeitsströmung wird wiederum eine effizientere Abscheidung von Feststoffpartikeln erreicht.

Zweckmässigerweise weisen die Strömungsumlenkmittel einen Auslasskanal auf, der einen achsnahen Bereich des Innenraums des Abscheidebehälters mit dem Auslass verbindet. Dieses Merkmal verbessert die Führung der abströmenden Flüssigkeit.

Des Weiteren ist es zweckmässig, wenn die Strömungsumlenkmittel zusammen mit der Behälterwand einen Strömungskanal bilden, der sich vom Einlass weg schräg nach unten windet. Dieses Merkmal verbessert die Führung der einströmenden Flüssigkeit.

Vorteilhafterweise weisen die Strömungsumlenkmittel einen Bypass-Kanal auf, durch den ein Teil der Flüssigkeit direkt vom Einlass zum Auslass fliessen kann. Durch diesen Bypass-Kanal kann der Druckverlust im erfindungsgemässen Schlammabscheider noch weiter reduziert werden, ohne dass die Abscheidungswirkung im selben Masse abnimmt.

Bei einer zweckmässigen Ausführungsvariante weisen die Strömungsumlenkmittel ein zur Behälterachse des Abscheidebehälters im Wesentlichen koaxiales, mit der Partikeltrennkammer kommunizierendes Abfuhrrohr auf. Die Anwesenheit eines solchen Abfuhrrohrs ist insbesondere bei relativ langen bzw. hohen Abscheidebehältern von Vorteil, weil dadurch die Ausbildung einer effizienten zyklonartigen Strömung begünstigt wird.

Vorteilhafterweise ist der Innendurchmesser des Abscheidebehälters 1,4 bis 3,2, vorzugsweise 1,8 bis 2,6, mal so gross wie die lichte Weite des Einlasses. Der Innendurchmesser d_{B} des Abscheidebehälters wird dabei im Bereich unterhalb des Einsatzteils bzw. des Abfuhrrohrs gemessen. Des Weiteren ist es vorteilhaft, wenn die von einem Zwischenboden bzw. bei Fehlen eines solchen vom Behälterboden jeweils bis zum obersten Niveau des Innenquerschnitts des Einlasses gemessene Innenhöhe des Abscheidebehälters 2 bis 6, vorzugsweise 3 bis 4,5, mal so gross ist wie die lichte Weite des Einlasses. Die Innenhöhe des Abscheidebehälters wird dabei bei Fehlen eines Zwischenbodens vom Behälterboden oder sonst vom Zwischenboden jeweils bis zum obersten Niveau des Innenquerschnitts des Einlasses gemessen. Ferner ist es vorteilhaft, wenn der Abstand zwischen einem Zwischenboden des Abscheidebehälters bzw., falls kein Zwischenboden vorhanden ist, zwischen dem Behälterboden einerseits und den Strömungsumlenkmitteln, d.h. deren achsnahen Eintrittsöffnung für abströmende Flüssigkeit, anderseits mindestens so gross ist wie 2/3 der lichten Weite des Einlasses. Mit diesen Abmessungsverhältnissen des Schlammabscheiders wird die Ausbildung einer besonders effektiven zyklonartigen Strömung im Abscheidebehälter und damit eine maximale Abscheidungswirkung erzielt.

Die hier genannten und beschriebenen Varianten und Merkmale können ebenfalls in Kombination zweier oder mehrerer Varianten oder Merkmale untereinander durchgeführt werden und diese Kombinationen werden von der vorliegenden Erfindung ebenfalls umfasst, gegeben solche Kombinationen sind nicht gegenseitig inkonsistent.

Im Folgenden wird der erfindungsgemässe Schlammabscheider unter Bezugnahme auf die beigefügten Zeichnungen anhand von Ausführungsbeispielen detaillierter beschrieben. Es zeigen:
- Fig. 1: - eine Querschnittsansicht von oben auf ein erstes Ausführungsbeispiel des erfindungsgemässen Schlammabscheiders;
- Fig. 2: - einen Längs- bzw. Vertikalschnitt des Schlammabscheiders nach der Linie II-II der Fig. 1;
- Fig. 3: - eine teilweise aufgeschnittene perspektivische Ansicht des erfindungsgemässen Schlammabscheiders;
- Fig. 4: - eine Seitenansicht des erfindungsgemässen Schlammabscheiders;
- Fig. 5: - eine weitere Seitenansicht des erfindungsgemässen Schlammabscheiders;
- Fig. 6: - ein Längs- bzw. Vertikalschnitt einer weiteren Alternative des erfindungsgemässen Schlammabscheiders;
- Fig. 7: - eine Draufsicht einer weiteren Ausführungsform des erfindungsgemässen Schlammabscheiders;
- Fig. 8: - eine Querschnittsansicht von oben auf die Ausführungsform des erfindungsgemässen Schlammabscheiders gemäss Fig. 7;
- Fig. 9: - eine Seitenansicht einer weiteren Ausführungsform des erfindungsgemässen Schlammabscheiders;
- Fig. 10: - ein Längs- bzw. Vertikalschnitt einer zusätzlichen Ausführungsform des erfindungsgemässen Schlammabscheiders;
- Fig. 11: - ein Längs- bzw. Vertikalschnitt einer zusätzlichen Ausführungsform des erfindungsgemässen Schlammabscheiders;
- Fig. 12-16: - fünf Varianten eines Zwischenbodens des Schlammabscheiders.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen. Die relativen Angaben "oben", "unten", "seitlich" etc. beziehen sich auf die in den Figuren dargestellte typische Einbaulage des erfindungsgemässen Schlammabscheiders im praktischen Einsatz.

Unter Schlamm werden in einem Flüssigkeitsstrom mitgeführte, z.B. suspendierte, Feststoffpartikel verstanden. Demzufolge ist unter einem Schlammabscheider im Sinne der Erfindung eine Vorrichtung zum Abscheiden von Feststoffpartikeln aus einem Flüssigkeitsstrom zu verstehen. Im Folgenden wird nur der kürzere Begriff Schlammabscheider verwendet.

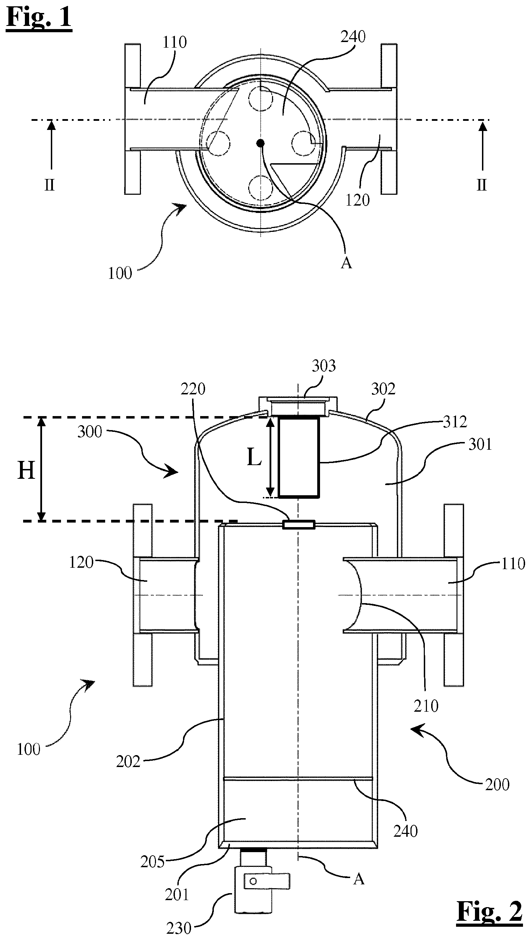

Die in den Figuren 1-3 dargestellte Ausführungsform eines erfindungsgemässen Schlammabscheiders weist ein Gefäss 100 auf, welches einen Einlass 110 und einen Auslass 120 hat. Weiterhin weist der Schlammabscheider einen topfförmigen Abscheidebehälter 200 mit einem Behälterboden 201, einer Behälterseitenwand 202 und einer Behälterachse A auf. Der Abscheidebehälter 200 ist über seine Höhe im Wesentlichen zylinderförmig ausgebildet. Im Behälterboden 201 ist ein Ablassventil 230 eingesetzt, welches dezentral zur Behälterachse A angeordnet ist.

Das Gefäss 100 umfasst zudem eine Partikeltrennkammer 300, welche einen Innenraum 301 zur Aufnahme eines Partikelabscheiders 310 und einen Gefässdeckel 302 hat. In dieser Ausführungsform befindet sich in der Partikeltrennkammer ein Magnet 312 zur Abscheidung von magnetischen Partikeln, welche nicht im Abscheidebehälter 200 durch die zyklonartige Bewegung der Flüssigkeit ausgeschieden wurden und in die Partikeltrennkammer 300 mitgeführt wurden. Der Magnet 312 ist von aussen durch eine Öffnung 303 mit einem Gewinde im Deckel 302 der Partikeltrennkammer 300 oder in der Wand der Partikeltrennkammer 300.

Der Magnet hat beispielsweise die Form eines Stabs, wie an der Figur zu erkennen ist.

Der Magnet ist derart angeordnet, dass er nicht in den Abscheidebehälter hineinragt, sondern sich ausserhalb des Abscheidebehälters in der Partikeltrennkammer befindet. Wie in Fig. 2 zu sehen ist, ist die Länge L des Magnetteils, welcher in der Trennkammer angeordnet ist, kleiner als die Höhe H der Patikeltrennkammer vom Auslass 220 des Abscheidebehälters 200 bis zur Öffnung 303 im Gefässdeckel 302 der Partikeltrennkammer 300. Grundsätzlich könnte der Magnet jedoch derart angeordnet sein, dass er aus der Öffnung 303 im Gefässdeckel 302 der Partikeltrennkammer 300 herausragen.

In seinem obersten Bereich unterhalb des - gegebenenfalls abnehmbaren - Gefässdeckels 302 weist der Schlammabscheider einen stutzenförmigen Einlass 110 und einen ebenso stutzenförmigen Auslass 120 auf. Der Einlass 110 und der Auslass 120 sind bezüglich der Behälterachse A an diametral gegenüberliegenden Seiten des Schlammabscheiders angeordnet und gegenseitig koaxial ausgerichtet.

In der vorliegenden Ausführungsform wird der Behälterboden 201 des Abscheidebehälters 200 durch eine Bodenplatte gebildet, welche Bodenplatte vier im Winkel von 90° voneinander beabstandete abschliessbare Bohrungen 204 dezentral zur Behälterachse aufweist. Das Ablassventil 230 ist durch eine der Bohrungen 204 mit dem Innenraum des Abscheidebehälters verbunden, während die drei weiteren Bohrungen verschlossen sind.

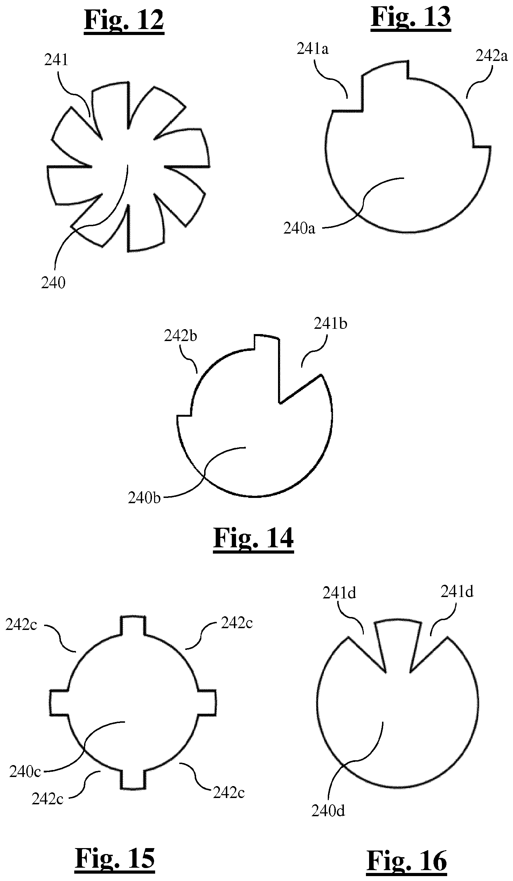

Im unteren Bereich des Abscheidebehälters 200 befindet sich oberhalb des Behälterbodens 201 ein strömungsberuhigter Schlammabsetzraum 205, welcher durch ein plattenförmiger Zwischenboden 240, der an seiner Peripherie durch mehrere Öffnungen 241 durchbrochen ist, nach oben hin abgegrenzt ist (siehe auch Figuren 12 bis 16 für weitere Beispiele von einsetzbaren Zwischenböden).

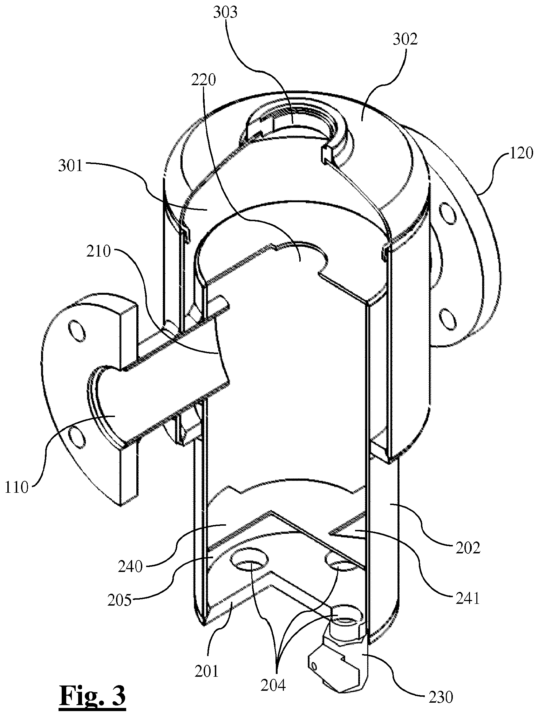

In Figur 3 ist zu erkennen, dass der Gefässdeckel 302 der Partikeltrennkammer entfernbar ist. Dieser Figur zeigt einen Schlammabscheider ohne Partikelabscheider. Der Partikelabscheider kann, beispielsweise im Falle eines Filters 311 durch Entfernung des Deckels 302 in die Partikeltrennkammer angeordnet werden, oder im Falle eines Magneten 312, alternativ durch die Öffnung 303 eingeführt werden. Weiterhin ist in dieser Figur die perspektivische Anordnung der einzelnen Komponenten einer Variante des Schlammabscheiders erkennbar.

Im praktischen Einsatz wird der Schlammabscheider in eine Flüssigkeit führende Leitung eingebaut. Dabei kann es sich typischerweise um eine Haushaltswasserleitung handeln. Die Flüssigkeit gelangt durch den Einlass 110 in den Schlammabscheider und durch die Eingangsöffnung 210 in den Abscheidebehälter 200. Vom Eingang 210 weg wird die Flüssigkeit an der Behälterwand 202 entlang schräg nach unten in den Behälterinnenraum geleitet, wobei eine zyklonartige Strömungsbewegung in der Nähe der Peripherie des Abscheidebehälters 200 herum entsteht.

Durch die Zyklonwirkung scheiden die in der Flüssigkeit mitgeführten Feststoffpartikel hauptsächlich in der Nähe der Behälterwand 202 aus und setzen sich am Zwischenboden 240 ab. Die Flüssigkeit strömt dann innerhalb der zyklonartig abwärts fliessenden Flüssigkeit aufwärts zur Partikeltrennkammer 300 nach oben und durch den Ausgang 220 des Abscheidebehälters 200 weiter in die Partikeltrennkammer 300.

Zwischen dem Boden 201 des Abscheidebehälters 200 und dem Zwischenboden 240 befindet sich ein strömungsberuhigter Schlammabsetzraum 205. Die auf dem Zwischenboden 240 sedimentierten Feststoffpartikel werden von der Flüssigkeitsströmung durch die peripheren Öffnungen 241 des Zwischenbodens 240 in den Schlammabsetzraum 205 gespült. Der abgesetzte Schlamm kann durch das Ablassventil 230 aus dem Schlammabsetzraum 205 abgeführt werden.

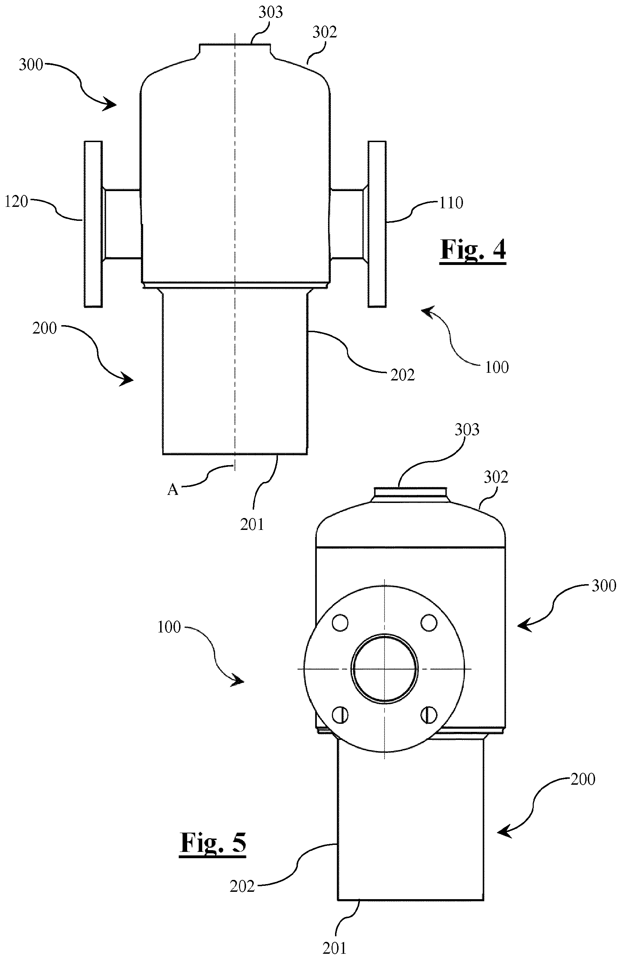

In den Figuren 4 und 5 sind zwei Seitenansicht des erfindungsgemässen Schlammabscheiders dargestellt.

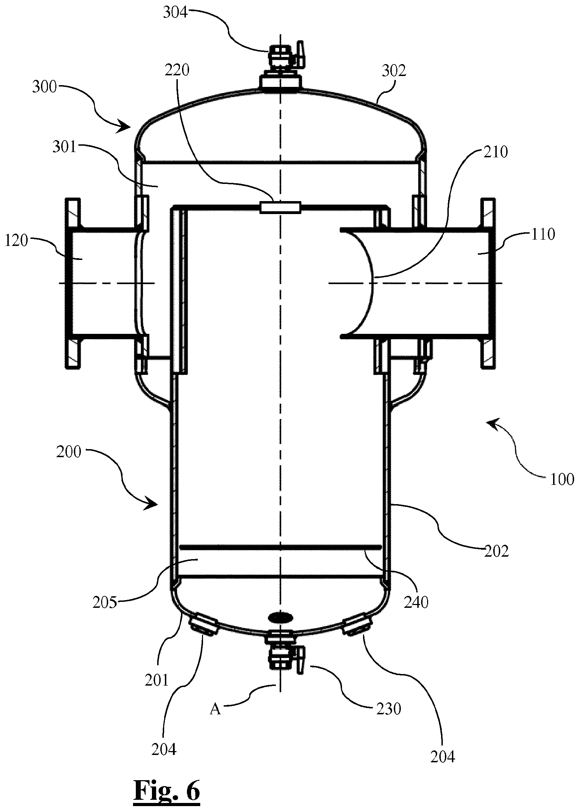

Figur 6 zeigt eine weitere Ausführungsform des erfindungsgemässen Schlammabscheiders ohne Partikelabscheider, in welcher Ausführungsform der Boden des Abscheidebehälters 200 durch einen gewölbten Boden 201 gebildet wird, welcher gewölbter Boden 201 im Winkel voneinander beabstandete abschliessbare Bohrungen 204 dezentral zur Behälterachse A aufweist. Das Ablassventil 230 ist durch eine der Bohrungen 204 mit dem Innenraum des Abscheidebehälters verbunden, während die drei weiteren Bohrungen verschlossen sind.

Der gewölbte Boden kann auch seine Spitze dezentral von der Behälterachse haben und das Ablassventil 230 an dieser Spitze angebracht sein. In diesem Fall reicht eine Bohrung 204 im gewölbten Boden 201 und der gewölbte Boden 201 ist derart mit einer Kupplung mit der Seitenwand 202 vom Abscheidebehälter 200 verbunden werden, dass der gewölbte Boden rotiert werden kann. Weiterhin weist die Ausführungsform in Figur 6 ein Ventil auf, welches mit der Partikeltrennkammer verbunden ist.

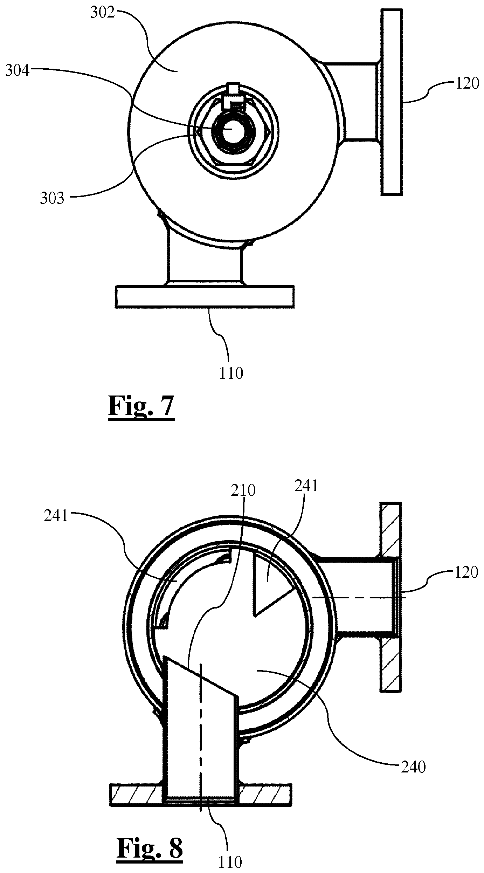

Figuren 7 und 8 zeigen eine weitere Ausführungsform des erfindungsgemässen Schlammabscheiders, in welcher Einlass 110 und Auslass 120 des Schlammabscheiders nicht diametral gegenüberliegend, sondern zur Behälterachse mit einem Winkel von 90° angeordnet sind. Diese spezielle Ausführungsform ermöglicht eine sehr einfache Umlenkung des Flüssigkeitsstroms im Kreislauf beispielsweise von einer vertikal verlaufenden Rohrleitung, welche mit dem Einlass 110 des Schlammabscheiders verbunden wäre, zu einer horizontal verlaufenden Rohrleitung, welche mit dem Auslass 120 des Schlammabscheiders verbunden wäre, ohne Verwendung eines zusätzlichen Rohrbogens

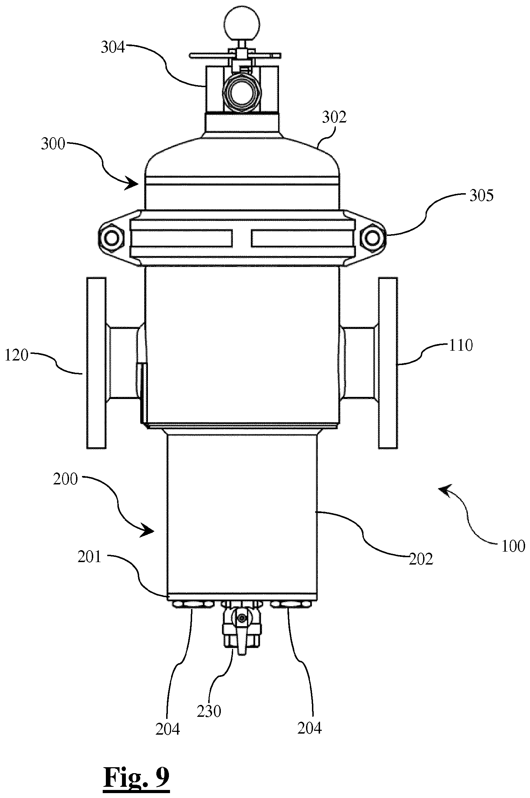

Des Weiteren zeigt Figur 9 eine Ausführung, bei welcher der Gefässdeckel 302 entfernbar ist und mit einer Klammer 305 mit der Wand der Partikeltrennkammer 300 verbunden ist.

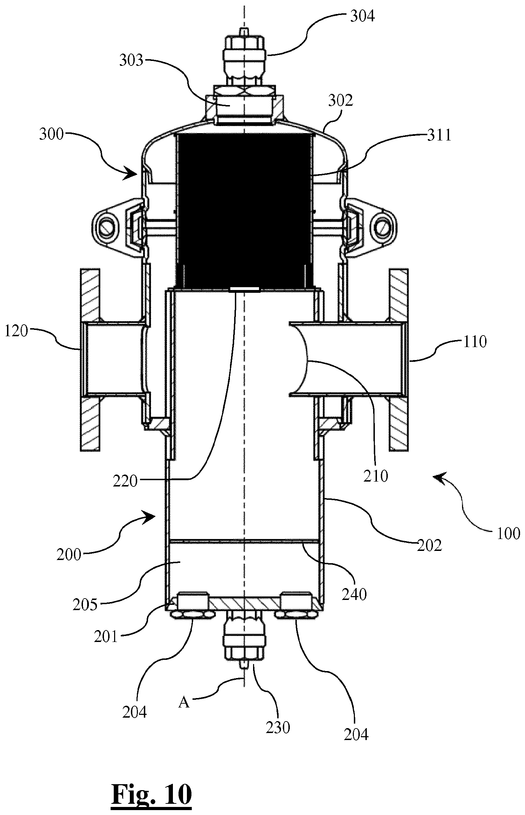

Figur 10 zeigt ein Ausführungsbeispiel des erfindungsgemässen Schlammabscheiders, in welcher ein Filter 311 in der Partikeltrennkammer 300 angeordnet ist. In dieser Ausführungsform hat der Filter eine zylindrische Form und befindet sich im Flüssigkeitsfluss des Schlammabscheiders. Der Filter 311 ist derart angeordnet, dass der gesamte Flüssigkeitsstrom durch den Filter geleitet wird, bevor die gefilterte Flüssigkeit die Partikeltrennkammer von feinen Partikeln aufgereinigt verlässt.

Der Filter kann auch andere Formen aufweisen, beispielhaft sein genannt:
Eine zylindrische Form, eine flache Form, welche direkt auf dem Auslass 220, eine gewölbte Form oberhalb des Auslasses 220, oder eine Innenauskleidung der Partikeltrennkammer.

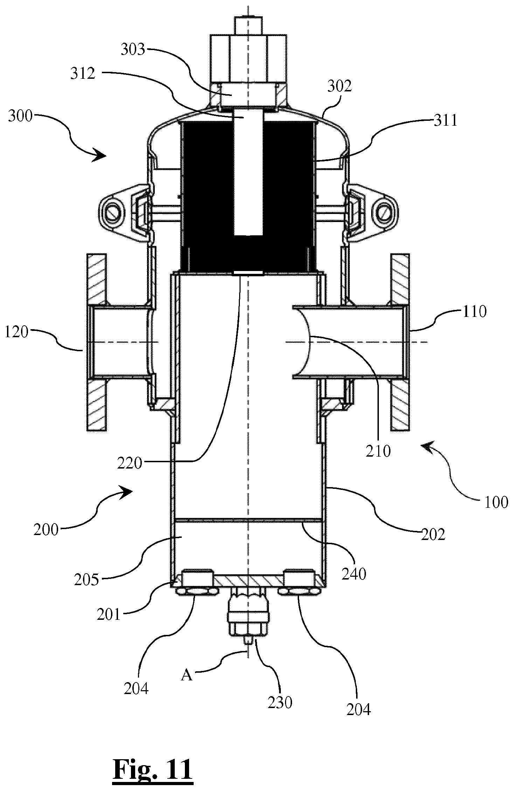

Figur 11 zeigt eine zusätzliche Ausführungsform, bei welcher sowohl ein Filter 311 als auch ein Magnet 312 in der Partikeltrennkammer 300 angeordnet sind. Der Filter 311 hat auch in dieser Variante eine zylindrische Form und umgibt den Magnet 312, so dass die Flüssigkeit, welche aus dem Auslass 220 des Abscheidebehälters tritt am Magneten vorbeifliesst, wodurch die magnetischen Partikel am Magneten abgeschieden werden, und die Flüssigkeit anschliessend den Filter passiert, in welchen die mehrheitlich nicht magnetischen Restpartikel abgefangen werden. Auch hier ist der Filter 311 derart angeordnet, dass der gesamte Flüssigkeitsstrom durch den Filter geleitet wird, bevor die gefilterte Flüssigkeit die Partikeltrennkammer von feinen Partikeln aufgereinigt verlässt.

Da in der Variante, welche in Figur 11 gezeigt ist, magnetische Partikel bereits vom Magneten grösstenteils abgefangen werden, ist die Standzeit, bis der Filter gereinigt oder gar gewechselt werden muss, deutlich verlängert.

Der Zwischenboden, auf dem sich die Feststoffpartikel absetzen, kann verschiedenartig ausgebildet sein. Die Figuren 12 - 16 zeigen vier Ausgestaltungen, die sich durch Form, Anzahl und Verteilung von peripheren Öffnungen bzw. Durchbrüchen unterscheiden. Beim Zwischenboden 240 gemäss Fig. 12 sind acht etwa keilförmige Öffnungen 241 gleichmässig über den Umfang des Zwischenbodens 240 verteilt. Beim Zwischenboden 240a der Fig. 13 sind eine keilförmige Öffnung 241a mit einem rechten Winkel und eine bogenförmige Öffnung 242a nebeneinander angeordnet. Beim Zwischenboden 240b der Fig. 14 sind eine keilförmige Öffnung 241b mit einem spitzen Winkel und eine bogenförmige Öffnung 242b nebeneinander angeordnet. Beim Zwischenboden 240c der Fig. 15 sind vier bogenförmige Öffnungen 242c gleichmässig über den Umfang verteilt angeordnet. Beim Zwischenboden 240d der Fig. 16 sind zwei nebeneinander liegende keilförmige Öffnungen 241d vorgesehen. Anzahl und Form der Öffnungen können variieren, wobei Anordnungen mit unsymmetrischer Verteilung der Öffnungen vorteilhafter sind, weil dadurch im Raum unterhalb des Zwischenbodens eine Zyklon-Strömung verhindert wird.

Ein Zwischenboden ist nicht in jedem Fall erforderlich. So kann der Zwischenboden 240 auch bei den in den Figuren 1-3 dargestellten Ausführungsbeispielen des erfindungsgemässen Schlammabscheiders entfallen.

Die Erfindung wurde vorstehend anhand von Ausführungsbeispielen erläutert, soll jedoch nicht auf diese Ausführungsbeispiele beschränkt sein. Vielmehr sind für den Fachmann zahlreiche Modifikationen denkbar, ohne dabei von der Lehre der Erfindung abzuweichen. Der Schutzbereich wird daher durch die nachstehenden Patentansprüche definiert.

## Patentansprüche

1. Schlammabscheider umfassend ein Gefäss (100) mit einem eine seitliche Behälterwand (202), einen Behälterboden (201) und eine Behälterachse (A) aufweisenden Abscheidebehälter (200) welcher einen Eingang (210) und einen Ausgang (220) sowie einen Innenraum aufweist und mit einer Partikeltrennkammer (300), welche am Ausgang (220) des Abscheidebehälters (200) angeordnet ist und mit dem Abscheidebehälter (200) in fluider Verbindung steht, einen Einlass (110) zur Zufuhr von Flüssigkeit in das Gefäss (100) und einen Auslass (120) zur Abfuhr der Flüssigkeit aus dem Gefäss (100), wobei der Schlammabscheider derart ausgebildet ist, dass in den Abscheidebehälter (200) eingeführte Flüssigkeit in einer zyklonartigen Bewegung entlang der Behälterwand (202) abwärts fliesst und dann innerhalb der zyklonartig abwärts fliessenden Flüssigkeit aufwärts zur Partikeltrennkammer (300) strömt, und wobei der Schlammabscheider wenigstens einen Partikelabscheider (310; 311; 312) umfasst, welcher in der Partikeltrennkammer (300) angeordnet ist, wobei im Behälterboden (201) wenigstens ein Ablassventil (230) eingesetzt ist, welches dezentral zur Behälterachse (A) im Behälterboden (201) angeordnet ist und mit dem Innenraum des Abscheidebehälters (200) verbunden ist, wobei der Behälterboden (201) des Abscheidebehälters (200) durch eine Bodenplatte gebildet ist, welche mehrere im Winkel voneinander beabstandete abschliessbare Öffnungen (204) dezentral zur Behälterachse (A) aufweist, und das Ablassventil (230) durch eine der Öffnungen (204) mit dem Innenraum des Abscheidebehälters (200) verbunden ist.

2. Schlammabscheider nach Anspruch 1, wobei der Partikelabscheider ausserhalb des Abscheidebehälters (200) angeordnet ist.

3. Schlammabscheider nach Anspruch 1 oder 2, wobei der wenigstens eine Partikelabscheider ein Filter (311) ist, welcher in der Partikeltrennkammer (300) derart angeordnet ist, dass die Flüssigkeit, welche in Betrieb aus dem Ausgang (220) des Abscheidebehälters (200) fliesst, den Filter (311) durchströmen kann.

4. Schlammabscheider nach einem der vorangehenden Ansprüche, wobei der wenigstens ein Partikelabscheider ein Magnet (312) ist, welcher in der Partikeltrennkammer (300) derart angeordnet ist, dass in Betrieb in der Flüssigkeit mitgenommene magnetische Partikel wenigstens teilweise am Magneten (312) abgeschieden werden können bevor die Flüssigkeit die Partikeltrennkammer (300) verlässt oder den Filter passiert.

5. Schlammabscheider nach einem der vorangehenden Ansprüche, wobei der Behälterboden (201) des Abscheidebehälters durch einen gewölbten Boden gebildet ist und im Behälterboden (201) wenigstens ein Ablassventil (230) eingesetzt ist, welches dezentral zur Behälterachse (A) im Behälterboden (201) angeordnet ist und mit dem Innenraum des Abscheidebehälters (200) verbunden ist.

6. Schlammabscheider nach Anspruch 5, wobei der gewölbte Boden eine dezentrale Wölbung aufweist, welcher gewölbter Boden insbesondere relativ zum Abscheidebehälter (200) um die Behälterachse (A) rotiert werden kann, und welche Wölbung ihre Spitze dezentral zur Behälterachse (A) aufweist und das Ablassventil (230) an der Spitze des gewölbten Bodens mit dem Innenraum des Abscheidebehälters (200) verbunden ist.

7. Schlammabscheider nach einem der vorangehenden Ansprüche, wobei der Behälterboden (201) des Abscheidebehälter (200) durch eine Bodenplatte gebildet ist, durch welche das Ablassventil (230) mit dem Innenraum des Abscheidebehälters (200) verbunden ist und relativ zum Abscheidebehälter (200) um die Behälterachse (A) rotiert werden kann.

8. Schlammabscheider nach einem der vorangehenden Ansprüche, wobei die Partikeltrennkammer (300) einen Gefässdeckel (302) umfasst, welcher entfernbar ist.

9. Schlammabscheider nach einem der vorangehenden Ansprüche, wobei der Einlass (110) und der Auslass (120) mit einem von 180° abweichenden Winkel in Bezug auf die Behälterachse (A) des Abscheidebehälters (100; 200) angeordnet sind.

10. Schlammabscheider nach einem der vorangehenden Ansprüche, wobei der Abscheidebehälter (200) in seinem unteren Bereich einen vorzugsweise strömungsberuhigten Schlammabsetzraum (205) aufweist.

11. Schlammabscheider nach Anspruch 10, wobei im Abscheidebehälter (200) oberhalb des strömungsberuhigten Schlammabsetzraums (205) ein Zwischenboden (240) mit mindestens einer peripheren Öffnung (241) angeordnet ist.

12. Schlammabscheider nach einem der vorangehenden Ansprüche, wobei im Abscheidebehälter (200) Strömungsumlenkmittel angeordnet sind, welche durch den Einlass (210) in den Abscheidebehälter (200) einströmende Flüssigkeit seitlich der Behälterwand (202) entlang und schräg nach unten umlenken.

## Claims

1. Dirt separator comprising a vessel (100) having a separation container (200) having a lateral container wall (202), a container bottom (201), and a container axis (A), which container has an inlet (210) and an outlet (220) as well as an interior, and having a particle separation chamber (300), which is disposed at the outlet (220) of the separation container (200) and stands in a fluid connection with the separation container (200), an inlet (110) for supply of liquid into the vessel (100), and an outlet (120) for discharge of the liquid out of the vessel (100), wherein the dirt separator is configured in such a manner that liquid introduced into the separation container (200) flows downward along the container wall (202) in a cyclone-like movement, and then flows upward to the particle separation chamber (300) within the liquid that flows downward in cyclone-like manner, and wherein the dirt separator comprises at least one particle separator (310; 311; 312), which is disposed in the particle separation chamber (300), wherein at least one drain valve (230) is inserted into the container bottom (201), which valve is disposed in the container bottom (201) non-centrally relative to the container axis (A) and is connected with the interior of the separation container (200), wherein the container bottom (201) of the separation container (200) is formed by a bottom plate that has multiple closable openings (204), arranged non-centrally relative to the container axis (A), spaced apart from one another at an angle, and the drain valve (230) is connected with the interior of the separation container (200) by means of one of the openings (204).

2. Dirt separator according to claim 1, wherein the particle separator is disposed outside of the separation container (200).

3. Dirt separator according to claim 1 or 2, wherein the at least one particle separator is a filter (311), which is disposed in the particle separation chamber (300) in such a manner that the liquid that flows out of the outlet (220) of the separation container (200) during operation can flow through the filter (311).

4. Dirt separator according to any one of the preceding claims, wherein the at least one particle separator is a magnet (312), which is disposed in the particle separation chamber (300) in such a manner that during operation, magnetic particles entrained in the liquid can be removed, at least in part, by the magnet (312) before the liquid leaves the particle separation chamber (300) or passes through the filter.

5. Dirt separator according to one of the preceding claims, wherein the container bottom (201) of the separation container is formed by a domed bottom, and at least one drain valve (230) is inserted in the container bottom (201), which valve is disposed in the container bottom (201) non-centrally relative to the container axis (A) and is connected with the interior of the separation container (200).

6. Dirt separator according to claim 5, wherein the domed bottom has a non-central dome, which domed bottom can be rotated about the container axis (A), particularly relative to the separation container (200), and which dome has its peak non-central to the container axis (A), and the drain valve (230) is connected with the interior of the separation container (200) at the peak of the domed bottom.

7. Dirt separator according to one of the preceding claims, wherein the container bottom (201) of the separation container (200) is formed by a bottom plate by means of which the drain valve (230) is connected with the interior of the separation container (200) and can be rotated relative to the separation container (200) and about the container axis (A).

8. Dirt separator according to anyone of the proceeding claims, wherein the particle separation chamber (300) comprises a vessel lid (302) that is removable.

9. Dirt separator according to any one of the preceding claims, wherein the inlet (110) and the outlet (120) are disposed at an angle that deviates from 180° with reference to the container axis (A) of the separation container (100; 200).

10. Dirt separator according to any one of the preceding claims, wherein the separation container (200) has a preferably slow-flow dirt settling chamber (205) in its lower region.

11. Dirt separator according to claim 10, wherein an intermediate bottom (240) having at least one peripheral opening (241) is disposed in the separation container (200), above the slow-flow dirt settling chamber (205).

12. Dirt separator according to any one of the preceding claims, wherein flow deflection means are disposed in the separation container (200), which means deflect liquid flowing into the separation container (200) through the inlet (210) laterally along the container wall (202) and downward at a slant.

## Revendications

1. Séparateur de boue comportant un réceptacle (100) muni d'un récipient de séparation (200) qui comprend une paroi de récipient (202) latérale, un fond de récipient (201) et un axe de récipient (A) et qui présente une entrée (210) et une sortie (220) ainsi qu'un volume intérieur, et muni d'une chambre de séparation de particules (300) qui est agencée à la sortie (220) du récipient de séparation (200) et qui est en liaison fluidique avec le récipient de séparation (200), et comportant une admission (110) pour amener du liquide dans le réceptacle (100) et une évacuation (120) pour évacuer le liquide hors du réceptacle (100),
le séparateur de boue étant réalisé de telle sorte que le liquide introduit dans le récipient de séparation (200) s'écoule vers le bas par un mouvement cyclonique le long de la paroi de récipient (202) et s'écoule alors, à l'intérieur du liquide s'écoulant vers le bas par un mouvement cyclonique, vers le haut vers la chambre de séparation de particules (300),
le séparateur de boue comprenant au moins un séparateur de particules (310 ; 311 ; 312) qui est agencé dans la chambre de séparation de particules (300), au moins une vanne d'évacuation (230) étant mise en place dans le fond de récipient (201), qui est agencée de façon décentrée par rapport à l'axe de récipient (A) dans le fond de récipient (201) et qui est reliée au volume intérieur du récipient de séparation (200),
le fond de récipient (201) du récipient de séparation (200) étant formé par une plaque de fond qui présente, de façon décentrée par rapport à l'axe de récipient (A), plusieurs orifices (204) refermables espacés angulairement les uns des autres, et la vanne d'évacuation (230) étant reliée au volume intérieur du récipient de séparation (200) par l'un des orifices (204).

2. Séparateur de boue selon la revendication 1, dans lequel le séparateur de particules est agencé à l'extérieur du récipient de séparation (200).

3. Séparateur de boue selon la revendication 1 ou 2, dans lequel ledit au moins un séparateur de particules est un filtre (311) qui est agencé dans la chambre de séparation de particules (300) de telle sorte que le liquide sortant par la sortie (220) du récipient de séparation (200) pendant le fonctionnement est apte à traverser le filtre (311).

4. Séparateur de boue selon l'une des revendications précédentes, dans lequel ledit au moins un séparateur de particules est un aimant (312) qui est agencé dans la chambre de séparation de particules (300) de telle sorte que des particules magnétiques entraînées dans le liquide pendant le fonctionnement peuvent être séparées au moins partiellement sur l'aimant (312), avant que le liquide ne quitte la chambre de séparation de particules (300) ou ne traverse le filtre.

5. Séparateur de boue selon l'une des revendications précédentes, dans lequel le fond de récipient (201) du récipient de séparation est formé par un fond bombé, et au moins une vanne d'évacuation (230) est mise en place dans le fond de récipient (201), qui est agencée de façon décentrée par rapport à l'axe de récipient (A) dans le fond de récipient (201) et qui est reliée au volume intérieur du récipient de séparation (200).

6. Séparateur de boue selon la revendication 5, dans lequel le fond bombé présente un bombement décentré, ledit fond bombé pouvant être mis en rotation autour de l'axe de récipient (A) en particulier par rapport au récipient de séparation (200), ledit bombement présentant son sommet de façon décentrée par rapport à l'axe de récipient (A), et la vanne d'évacuation (230) étant reliée au volume intérieur du récipient de séparation (200), au niveau du sommet du fond bombé.

7. Séparateur de boue selon l'une des revendications précédentes, dans lequel le fond de récipient (201) du récipient de séparation (200) est formé par une plaque de fond par laquelle la vanne d'évacuation (230) est reliée au volume intérieur du récipient de séparation (200) et peut être mise en rotation autour de l'axe de récipient (A) par rapport au récipient de séparation (200).

8. Séparateur de boue selon l'une des revendications précédentes, dans lequel
la chambre de séparation de particules (300) comprend un couvercle de réceptacle (302) qui est amovible.

9. Séparateur de boue selon l'une des revendications précédentes, dans lequel l'admission (110) et l'évacuation (120) sont agencées sous un angle différent de 180° par rapport à l'axe de récipient (A) du récipient de séparation (100 ; 200).

10. Séparateur de boues selon l'une des revendications précédentes, dans lequel le récipient de séparation (200) comprend dans sa zone inférieure un volume de déposition de boue (205) de préférence à écoulement tranquillisé.

11. Séparateur de boue selon la revendication 10, dans lequel un fond intermédiaire (240) ayant au moins un orifice périphérique (241) est agencé dans le récipient de séparation (200) au-dessus du volume de déposition de boue (205) à écoulement tranquillisé.

12. Séparateur de boue selon l'une des revendications précédentes, dans lequel des moyens de renvoi d'écoulement sont agencés dans le récipient de séparation (200), qui renvoient un liquide, rentrant par l'entrée (210) dans le récipient de séparation (200), latéralement le long de la paroi de récipient (202) et en oblique vers le bas.
